# EUROPÄISCHE PATENTSCHRIFT

(11) **EP 0 978 716 B1**
(45) Veröffentlichungstag und Bekanntmachung des Hinweises auf die Patenterteilung: **04.10.2006**
(21) Anmeldenummer: 98114452.0
(22) Anmeldetag: 01.08.1998
(51) Int. Cl.: G01N 1/14

(54) **Vorrichtung und Verfahren zur Entnahme eines vorbestimmbaren Volumens einer Probe eines Mediums**
Device and method for taking a predetermined volume of a sample from a medium
Dispositif et procédé pour le prélèvement d'un volume prédéterminé d'un échantillon d'un milieu

(43) Veröffentlichungstag der Anmeldung: 09.02.2000
(73) Patentinhaber: ENDRESS + HAUSER WETZER GmbH + Co. KG, 87481 Nesselwang (DE)
(72) Erfinder: Lebski, Hubert, 87484 Nesselwang (DE); Waldhauser, Dieter, 87435 Kempten (DE); Schneider, Wilhelm, 87629 Füssen (DE); Einsiedler, Helmut, 87629 Füssen (DE)
(74) Vertreter: Andres, Angelika Maria

(56) Entgegenhaltungen:
- DE-A- 2 459 224
- DE-A- 2 824 155
- DE-U- 29 514 872
- US-A- 3 795 347
- US-A- 3 880 011
- US-A- 4 037 472
- US-A- 4 077 263
- US-A- 4 418 581

## Beschreibung

Die Erfindung betrifft eine Vorrichtung und ein Verfahren zur Entnahme eines vorbestimmbaren Volumens einer Probe eines Mediums. Insbesondere beschäftigt sich die Erfindung mit solch einer Vorrichtung und einem Verfahren, bei denen eine Probe aus einem in einem offenen Gerinne strömenden oder in einem Rohr drucklos fließenden Medium entnommen wird.

Üblicherweise wird dazu mittels einer Pumpe das Medium (häufig auch mit hohem Feststoffanteil) über eine Ansaugleitung, meist eine Schlauch- oder Rohrleitung, aus dem Gerinne bzw. offenen Rohr angesaugt und von oben her in ein senkrecht montiertes Dosiergefäß geleitet. Jener Teil der Ansaugleitung, der dazu in das Dosiergefäß hineinragt und der üblicherweise als Dosierrohr bezeichnet wird, trägt auf seiner Mantelfäche einen Maßstab in Form von Markierungen, mit Hilfe derer ein Benutzer die Größe des Teilvolumens im Dosiergefäß einstellen kann, das sich unterhalb des Dosierrohres im Dosiergefäß befindet und das dem gewählten Probevolumen entspricht.

Bei einer herkömmlichen Probenahme wird das angesaugte Medium solange in das Dosiergefäß geleitet, bis das Dosiergefäß gefüllt ist und der ansteigende Pegel des Mediums einen im oberen Teil des Dosiergefäßes angebrachten Sensor erreicht. Der Sensor löst dadurch ein Signal aus, wodurch das Ansaugen des Mediums beendet wird. Anschließend wird das Dosiergefäß entweder mit Druck beaufschlagt oder zur Atmosphäre geöffnet, um das gewünschte Probevolumen zu dosieren (siehe z.b. US-A-3 795 347, worin eine Vorrichtung gemäß dem einleitenden Teil von Anspruch 1 offenbart wird). Die Menge des Mediums, in die das Dosierrohr eintaucht, fließt aus dem Dosiergefäß heraus, so daß nur das gewünschte Probevolumen im Dosiergefäß verbleibt. Zusätzlich fließt das in der Ansaugleitung befindliche Fluid in das Gerinne zurück. Die Probe wird dann aus dem Dosiergefäß in ein oder mehre Probegefäße abgelassen.

Bei den geschilderten Probenahmevorrichtungen wird das gewünschte Probevolumen nur mechanisch über die in das Dosiergefäß ragende Länge des Dosierrohres eingestellt, indem die Länge des in einem Deckel des Dosiergefäßes geführten Dosierrohres verändert wird (meist dauerhaft!).

Bei einer anderen, in der Druckschrift CA-A-2,192,149 beschriebenen Vorrichtung kann zwar die Länge des Dosierrohres im Dosiergefäß durch Drehen des Dosierrohres verändert werden, aber auch diese Methode erfordert immer noch einen mechanischen Eingriff eines Benutzers.

Das gewünschte Probevolumen läßt sich in den herkömmlichen Vorrichtungen meist nur vor der ersten Inbetriebnahme oder bei einem Wechsel des Probevolumens einstellen. Eine Veränderung des Probevolumens von einer Probenahme zur nächstfolgenden als Anpassung an einen sich ändernden Durchfluß des Mediums im Gerinne, wie es z.B. für eine durchflußproportionale Probenahme gewünscht wird, ist während des kontinuierlichen Betriebes nicht möglich.

Ein weiteres Problem der erläuterten Probenahmesysteme besteht darin, daß zunächst mehr Medium in das Dosiergefäß gesaugt wird, als für die eigentliche Probe benötigt wird. Beim Füllen des Dosierbehälters beginnen die Feststoffe feststoffhaltiger Medien zu sedimentieren und sich im unteren Bereich des Dosierbehälters anzureichern, aus dem letztendlich die Probe abgefüllt wird. Wenn das gegenüber dem eingestellten Probevolumen überschüssige Medium aus dem Dosiergefäß (nach oben) heraus in das Gerinne zurückfließt, verbleiben die sedimentierten Feststoffe auch aus dem überschüssigen Medium im unteren Teil des Dosiergefäßes. Die Konzentration der Feststoffe in der im unteren Bereich des Dosiergefäßes stehenden Probe hat sich durch die Sedimentation der Feststoffe dann aber bereits derart erhöht, daß die in ein Probegefäß abzufüllende Probe nicht mehr repräsentativ für das zu untersuchende Medium ist.

Eine Aufgabe der Erfindung ist es daher, eine Vorrichtung und ein Verfahren zur Probenahme zu schaffen, mit denen das gewünschte Probevolumen - auch während des laufenden Betriebes - ohne mechanische Eingriffe und auf einfache Weise veränderbar ist, wobei eine Anreicherung von Feststoffen in der im Dosiergefäß befindlichen Probe vermieden wird, um so eine für das Medium repräsentative Probe zu erhalten.

Zur Lösung dieser Aufgabe besteht die Erfindung in einer Vorrichtung zur Entnahme eines vorbestimmten Volumens einer Probe eines in einer offenen Rinne oder drucklos in einem Rohr strömenden Mediums, welche Vorrichtung umfaßt:
- eine Steuereinheit
- ein davon angesteuertes pneumatischen Schaltwerk,
- eine von der Steuereinheit geschalteten Pumpe,
- ein Probesammelgefäß zur Aufnahme des Probevolumens,
- eine Abfüllvorrichtung,
- eine als Ansaugleitung verwendete Schlauch- bzw. Rohrleitung,
   -- durch die die Probe über eine Einlaßöffnung in das Probesammelgefäßes gelangt, gekennzeichnet durch
- eine in die Ansaugleitung integrierte Erkennungseinheit,
   -- die eine Anwesenheit des Mediums in der Ansaugleitung feststellt.

Ferner besteht die Erfindung zur Lösung der genannten Aufgabe in einem Verfahren zur Entnahme eines vorbestimmten Volumens einer Probe eines in einem offenen Gerinne oder drucklos in einem Rohr strömenden Mediums mit folgenden Schritten:
- eine Steuereinheit schaltet eine mit einem Probesammelgefäß pneumatisch verbundene Pumpe und wenigstens ein Ventil in einem verschiedene Ventile umfassenden pneumatischen Schaltwerk derart, daß im Probesammelgefäß ein Unterdruck erzeugt wird;
- durch den Unterdruck wird das Medium aus dem Gerinne durch die Ansaugleitung in das Probesammelgefäß gesaugt;
- sobald von einer in die Ansaugleitung integrierten Erkennungseinheit eine Anwesenheit des Mediums festgestellt und dies an die Steuereinheit signalisiert wird, beginnt eine einem gewünschten Volumen der Probe entsprechende, vorgewählte und von der Steuereinheit überwachte Zeitdauer abzulaufen;
- nach Verstreichen der Zeitdauer schaltet die Steuereinheit die Pumpe aus und das pneumatische Schaltwerkes derart, daß das Probesammelgefäß zur Atmosphäre geöffnet wird;
- unter dem Einfluß der Gravitation läuft das noch in der Ansaugleitung befindliche Medium, das nicht für die Probe benötigt wird, in das Gerinne zurück; und
- die im Probesammelgefäß befindliche Probe wird in wenigstens einen Probebehälter abgefüllt.

In einer besonderen Ausgestaltung der erfindungsgemäßen Vorrichtung ist vorgesehen, daß die Abfüllvorrichtung einen flexiblen Schlauch und eine Quetschvorrichtung zum Abklemmen des Schlauches umfaßt.

Eine weitere vorteilhafte Ausgestaltung der erfindungsgemäßen Vorrichtung sieht vor, die Erkennungseinheit so dicht wie möglich an der Einlaßöffnung des Probesammelgefäßes anzuordnen.

Bei einer anderen vorteilhaften Ausgestaltung der erfindungsgemäßen Vorrichtung umfaßt die Erkennungseinheit einen optischen, kapazitiven oder induktiven Sensor oder einen Leitfähigkeits-Sensor zur Bestimmung der Anwesenheit des Mediums sowie einen mit dem Sensor verbundenen Signalgenerator, dessen Signal zur Mitteilung der Anwesenheit des Mediums an die Steuereinheit dient.

In weiterer vorteilhafter Ausgestaltung der erfindungsgemäßen Vorrichtung wird als pneumatisches Schaltwerk ein Ventilblock mit einem Nockenschaltwerk oder Magnetventilen verwendet.

In vorteilhafter Weiterbildung der erfindungsgemäßen Vorrichtung ist das Probesammelgefäß im Bereich seiner Einlaßöffnung mit einem Notausschalter versehen, der die Zufuhr des Mediums in das Probesammelgefäß abbricht.

Bei einer vorteilhaften Weiterbildung des erfindungsgemäßen Verfahrens wird zu wenigstens einem vorbestimmten Probevolumen die Zeitdauer ermittelt, die zum Ansaugen und Ansammeln des Mediums im Probesammelgefäß erforderlich ist, wobei damit zu verschiedenen Probevolumina gehörende Zeitdauern ermittelt werden können und für wenigstens ein gewünschtes Probevolumen die ermittelte zugehörige Zeitdauer in die Steuereinheit eingegeben und/oder gespeichert wird.

Eine vorteilhafte Ausgestaltung des erfindungsgemäßen Verfahrens sieht vor, zur Steuerung der Pumpe während der Probenahme eine einem gewünschten Probevolumen entsprechende, in der Steuereinheit gespeicherte Zeitdauer zu verwenden.

Bei einer vorteilhaften Weiterbildung des erfindungsgemäßen Verfahrens wird vor einer erneuten Probenahme die Ansaugleitung mittels Druckbeaufschlagung durch die Pumpe leergeblasen.

Ein besonderer Vorteil der Erfindung besteht darin, daß jeweils nur eine solche Menge des Mediums in das Probesammelgefäß geleitet wird, die dem gewünschten Probevolumen entspricht. Dadurch stimmt der Feststoffgehalt der letztlich in ein Probengefäß abgefüllten Probe mit dem Feststoffgehalt des im Gerinne bzw. Rohr befindlichen Mediums überein. Ein zusätzlicher Schritt für die Dosierung des abzufüllenden Probevolumens ist nicht erforderlich.

Die Erfindung hat den weitereren besondereren Vorteil, daß sie eine Einstellung des gewünschten Probevolumens erlaubt, ohne daß ein Verkürzen oder Verdrehen des in das Probesammelgefäß hineinragenden Dosierrohres oder ein anderer mechanischer Eingriff in die Probenahmevorrichtung erforderlich ist. Allein durch Änderung der für die Probenahme vorgegebenen Zeitdauer ist es mit der Erfindung in einfacher Weise möglich, ein dem Durchfluß des Mediums im Gerinne bzw. Rohr proportionales Probevolumen einzustellen. Da außerdem die die Probenahme steuernde Zeitdauer in der Steuereinheit verwaltet wird und dort auch gespeichert werden kann, ist es möglich, die Einströmdauer des Mediums ins Probesammelgefäß und damit auch das Probevolumen an einen gemessenen Durchflußwert des Mediums im Gerinne bzw. Rohr automatisch anzupassen.

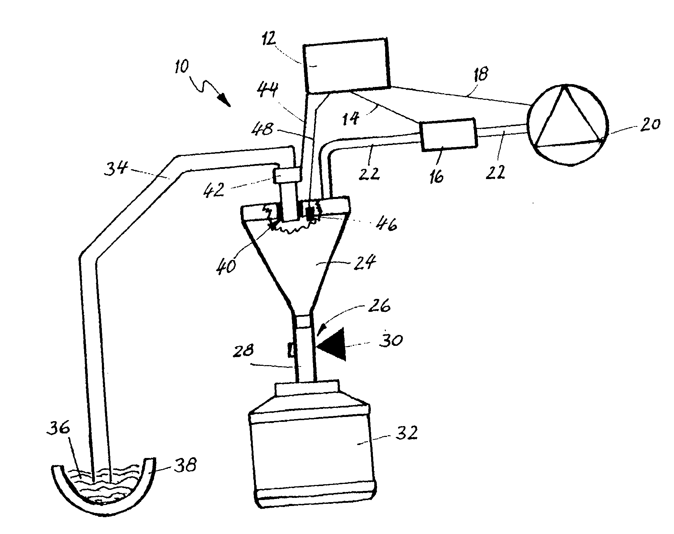

Nachfolgend wird die Erfindung am Beispiel einer bevorzugten Ausführungsform anhand der einzigen Figur näher erläutert.

Die Zeichnung zeigt eine schematische Darstellung einer Probenahmevorrichtung 10, die aus einer Steuereinheit 12, beispielsweise einer programmierbaren Steuereinheit, besteht und die über eine elektrische erste Leitung 14 Ventile eines pneumatischen Schaltwerkes 16 stellen und über eine elektrische zweite Leitung 18 eine elektrische Pumpe 20 schalten kann. Die Pumpe 20 ist vorzugsweise eine Vakuum-Membranpumpe. Für die Erfindung können verschiedene Steuereinheiten verwendet werden, z.B. ist eine Steuereinheit 12 möglich, die Probenahmen vollautomatisch auslöst und kontrolliert, wobei allerdings auch ein Auslösen durch einen Benutzer möglich ist. Ohne Einschränkung der Erfindung kann auch eine halbautomatische Steuereinheit 12 zur Anwendung kommen, die nach Auslösung einer Probenahme durch einen Benutzer den weiteren Ablauf der Probenahme kontrolliert.

Als pneumatisches Schaltwerk 16 eignet sich besonders ein Ventilblock mit einer Schrittwerk-Steuerung, vorzugsweise mit einem sogenannten Nockenschaltwerk. Solche Nockenschaltwerke haben den Vorteil, daß sie nicht korrosionsanfällig sind, da eine Membran mechanisch bewegte Teile von luftdurchströmten Wegen trennt. Ein solches und besonders für die Erfindung geeignetes Nockenschaltwerk ist unter der Bezeichnung "AIR-MANAGER" bei der Firma Endress+Hauser Wetzer GmbH+Co. KG, D-87481 Nesselwang, erhältlich. Andererseits können aber auch Ventilblöcke mit herkömmlichen Magnetventilen als pneumatische Schaltwerke verwendet werden.

Das von der Steuereinheit 12 angesteuerte pneumatische Schaltwerk 16 ist in eine erste Rohrleitung 22 integriert, die die Pumpe 20 mit einem Probesammelgefäß 24 verbindet. Das Probesammelgefäß 24, das das Probevolumen aufnimmt, ist nach unten hin durch eine Abfüllvorrichtung 26 verschlossen. Diese umfaßt beispielsweise einen flexiblen Schlauch 28, durch den die im Probesammelgefäß 24 befindliche Probe in wenigstens ein Probegefäß 32 abgelassen werden kann. Zum Verschließen des flexiblen Schlauches 28 dient eine Quetschvorrichtung 30, die vorzugsweise ein pneumatisches Quetschventil mit einer Rollenmembran ist. Ein solches und besonders für die Erfindung geeignetes pneumatisches Quetschventil mit einer Rollenmembran ist bei der Firma Endress+Hauser Wetzer GmbH+Co. KG, D-87481 Nesselwang, erhältlich.

Eine Ansaugleitung 34, beispielsweise eine Schlauch- oder Rohrleitung, verbindet das in einer offenen Rinne 38 strömende Medium 36 mit dem Probesammelgefäß 24. Anstatt des offenen Gerinnes kann die Ansaugleitung 34 auch in einem Rohr münden, in dem das Medium drucklos fließt.

Eine in einem Deckel 39 des Probesammelgefäßes 24 vorgesehene Öffnung, in der die Ansaugleitung 34 von oben her in das Probesammelgefäß 24 mündet, ist als Einlaßöffnung 40 bezeichnet. Nahe dieser Einlaßöffnung 40 ist in die Ansaugleitung 34 eine Erkennungseinheit 42 integriert, die die Anwesenheit des angesaugten Mediums 36 über eine elektrische dritte Leitung 44 an die Steuereinheit 12 signalisiert. Zu diesem Zweck umfaßt die Erkennungseinheit 42 vorzugsweise einen die Anwesenheit des angesaugten Mediums 36 feststellenden Sensor, beispielsweise einen optischen, kapazitiven, induktiven Sensor oder einen Leitfähigkeits-Sensor, sowie einen Signalgenerator, der ein Signal erzeugt und es an die Steuereinheit 12 weiterleitet.

Ein im Bereich des Deckels 39 des Probesammelgefäßes 24 innen vorgesehener Notausschalter 46 meldet der Steuereinheit 12 über eine elektrische vierte Leitung 48, wenn ihn das im Probesammelgefäß 24 sich ansammelnde Medium 36 erreicht. Der weitere Zustrom von Medium 36 in das Probesammelgefäß 24 wird dann unter- bzw. abgebrochen und damit ein Überlaufen des Probesammelgefäßes 24 verhindert.

Elektrische Energiequellen, die der Versorgung der in der Probenahmevorrichtung 10 vorgesehenen elektrischen Vorrichtungen dienen, sind ebenso wie die dazu erforderlichen elektrischen Versorgungsleitungen nicht Gegenstand der Erfindung. Sie sind an sich dem Fachmann geläufig und daher aus Gründen der Übersichtlichkeit nicht in der Zeichnung dargestellt.

Vor dem eigentlichen Probenehmen wird zu wenigstens einem vorbestimmten Probevolumen die Zeitdauer ermittelt, die zum Ansaugen und Ansammeln des Mediums im Probesammelgefäß erforderlich ist. Anschließend werden damit zu verschiedenen Probevolumina gehörende Zeitdauern ermittelt und entweder in Form einer Wertetabelle oder in Form eines entsprechenden funktionalen Zusammenhangs in die Steuereinheit eingegeben und/oder dort gespeichert. Für ein gewünschtes Probevolumen wird dann in der Steuereinheit jeweils die Zeitdauer abgerufen bzw. gewählt und eingestellt.

Die eigentliche Probenahme wird über die Steuereinheit 12 entweder von einem Benutzer ausgelöst, sofern es sich um eine halb-automatische Steuereinheit handelt, oder sie wird bei einem vollautomatischen Gerät gemäß einem vorbestimmten Programmablauf durch die Steuereinheit 12 gestartet. Die Steuereinheit 12 schaltet über die elektrische erste Leitung 14 das pneumatische Schaltwerk 16, insbesondere wenigstens eines der Ventile des pneumatischen Schaltwerkes 16, sowie über die elektrische zweite Leitung 18 die Pumpe 20 in der Weise, daß das Probesammelgefäß 24 über die erste Rohrleitung 22, eine pneumatische Leitung, evakuiert wird. Die Abfüllvorrichtung 26 ist dabei verschlossen.

Durch den Unterdruck im Probesammelgefäß 24 wird das im offenen Gerinne 38 bzw. Rohr strömende Medium 36 durch die mit dem Probesammelgefäß 24 verbundene Ansaugleitung 34 in das Probesammelgefäß 24 gesaugt. Wenn das angesaugte Medium 36 die Erkennungseinheit 42 passiert, löst deren Sensor aus und meldet mittels eines entsprechenden Signals die Anwesenheit des Mediums 36 an die Steuereinheit 12. In der Steuereinheit 12 wird der Ablauf einer vorgewählten Zeitdauer überwacht, die einem gewünschten Probevolumen des Mediums entspricht und während der das angesaugte Medium 36 weiterhin in das Probesammelgefäß 24 strömt.

Wenn die dem gewünschten Probevolumen entsprechende Zeitdauer verstrichen ist, schaltet die Steuereinheit 12 die Pumpe 20 und das pneumatische Schaltwerk 16 ab, insbesondere eines der Ventile darin, so daß der bis dahin im Probesammelgefäß 24 herrschende (Unter-)Druck zur Atmosphäre ausgeglichen wird. Unter dem Einfluß der Schwerkraft fließt dann das noch in der Ansaugleitung 34 befindliche Medium 36 in das offene Gerinne 38 zurück. Im Probesammelgefäß 24 befindet sich kein überschüssiges Medium, sondern ausschließlich das gewünschte Probevolumen, wodurch sich eine zusätzliche, bei herkömmlichen Probenehmern erforderliche Dosierung der Probe erübrigt. Es ist kein überschüssiges Medium im Probesammelgefäß 24 vorhanden, daß dort heraus- und in das Gerinne 38 zurückgedrückt werden muß. Dadurch verhindert die Erfindung, daß sich bei feststoffhaltigen Medien auch Feststoffe aus dem überflüssigen Volumen des Mediums im Probesammelgefäß 24 absetzen und so die Feststoffkonzentration der eigentlichen Probe verfälschen.

Nach der Probenahme und nach Entlüften der Probenahmevorrichtung 10 wird unter der Abfüllvorrichtung 26 ein Probebehälter 32 aufgestellt, sofern er sich nicht bereits schon dort befunden hat. Die Quetschvorrichtung 30 wird nun geöffnet und das Probevolumen abgelassen. Falls das im Probesammelgefäß 24 befindliche Volumen des Mediums ausreicht, können auch auf mehrere, dann eventuell kleinere Probebehälter gefüllt werden.

Es hat sich besonders bei stark sedimentierenden Medien gezeigt, daß es erforderlich werden kann, die Ansaugleitung 34 nach einer Probenahme und vor einer erneuten Probenahme freizublasen, um ein Ablagern von sedimentierten Feststoffen in der Ansaugleitung 34 und eine mögliche Verfälschung der nachfolgenden Probe zu verhindern. Die Ansaugleitung 34 kann dazu nach jeder Probenahme mittels Druckbeaufschlagung durch die Pumpe 20 von abgelagerten Feststoffen gesäubert werden.

Für die Erfindung können bisher übliche, eingangs geschilderte Dosiergefäße als Probesammelgefäße 24 verwendet werden. Der darin angebrachte Sensorschalter, der bisher das Ansaugen des Mediums beendete, kann dann als Notausschalter 46 verwendet werden, so daß ein Überlaufen des Probesammelgefäßes 24 - aus welchen Gründen auch immer - verhindert wird. Der Sensorschalter wird dazu entweder mit der Steuereinheit 12 verbunden, die dann im Falle des Überlaufens die Pumpe 20 abschaltet, oder er wird direkt als Unterbrecher in eine elektrische Versorgungsleitung für die Pumpe 20 eingeschleift.

## Patentansprüche

1. Vorrichtung (10) zur Entnahme eines vorbestimmten Volumens einer Probe eines in einer offenen Rinne (38) oder drucklos in einem Rohr strömenden Mediums (36); welche Vorrichtung (10) umfaßt:
- eine Steuereinheit (12)
- ein davon angesteuertes pneumatischen Schaltwerk (16),
- eine von der Steuereinheit (12) geschalteten Pumpe (20),
- ein Probesammelgefäß (24) zur Aufnahme des Probevolumens,
- eine Abfüllvorrichtung (26),
- eine als Ansaugleitung (34) verwendete Schlauch- bzw. Rohrleitung,
- durch die die Probe über eine Einlaßöffnung (40) in das Probesammelgefäßes (24) gelangt,
**gekennzeichnet durch**
- eine in die Ansaugleitung (34) integrierte Erkennungseinheit (42),
- die eine Anwesenheit des Mediums (36) in der Ansaugleitung (34) feststellt.

2. Vorrichtung nach Anspruch 1, bei der die Abfüllvorrichtung (26) einen flexiblen Schlauch (28) und eine Quetschvorrichtung (30) zum Abklemmen des Schlauches (28) umfaßt.

3. Vorrichtung nach Anspruch 1, bei der die Erkennungseinheit (42) so dicht wie möglich an der Einlaßöffnung (40) des Probesammelgefäßes (24) angeordnet ist.

4. Vorrichtung nach Anspruch 1, bei der die Erkennungseinheit (42) einen optischen, kapazitiven, induktiven Sensor oder einen Leitfähigkeits-Sensor zur Bestimmung der Anwesenheit des Mediums (36) sowie einen mit dem Sensor verbundenen Signalgenerator umfaßt, dessen Signal zur Mitteilung der Anwesenheit des Mediums an die Steuereinheit (12) dient.

5. Vorrichtung nach Anspruch 1, bei der das pneumatischen Schaltwerk (16) entweder ein Ventilblock mit einem Nockenschaltwerk oder mit Magnetventilen ist.

6. Vorrichtung nach Anspruch 1, bei der das Probesammelgefäß (24) im Bereich seiner Einlaßöffnung (40) mit einem Notausschalter (46) versehen ist, der die Zufuhr des Mediums (36) in das Probesammelgefäß (24) abbricht.

7. Verfahren zur Entnahme eines vorbestimmten Volumens einer Probe eines in einem offenen Gerinne (38) oder drucklos in einem Rohr strömenden Mediums (36) mit folgenden Schritten:
- eine Steuereinheit (12) schaltet eine mit einem Probesammelgefäß (24) pneumatisch verbundene Pumpe (20) und wenigstens ein Ventil in einem verschiedene Ventile umfassenden pneumatischen Schaltwerk (16) derart, daß im Probesammelgefäß (24) ein Unterdruck erzeugt wird;
- durch den Unterdruck wird das Medium (36) aus dem Gerinne (38) bzw. aus dem Rohr durch die Ansaugleitung (34) in das Probesammelgefäß (24) gesaugt;
- sobald von einer in die Ansaugleitung (34) integrierten Erkennungseinheit (40) eine Anwesenheit des Mediums (36) festgestellt und dies an die Steuereinheit (12) signalisiert wird, beginnt eine einem gewünschten Volumen der Probe entsprechende, vorgewählte und von der Steuereinheit (12) überwachte Zeitdauer abzulaufen;
- nach Verstreichen der Zeitdauer schaltet die Steuereinheit (12) die Pumpe (20) aus und das pneumatische Schaltwerkes (16) derart, daß das Probesammelgefäß (24) zur Atmosphäre geöffnet wird;
- unter dem Einfluß der Gravitation läuft das noch in der Ansaugleitung (34) befindliche Medium (36), das nicht für die Probe benötigt wird, in das Gerinne (38) zurück; und
- die im Probesammelgefäß (24) befindliche Probe wird in wenigstens einen Probebehälter (32) abgefüllt.

8. Verfahren nach Anspruch 7, bei dem vor dem eigentlichen Probenehmen, beginnend mit Schritt a, zu wenigstens einem vorbestimmten Probevolumen die zugehörigen Zeitdauer ermittelt wird, die das Medium (36) benötigt, um angesaugt zu werden und sich im Probesammelgefäß (24) anzusammeln, so daß zu verschiedenen Probevolumina gehörende Zeitdauern ermittelt werden können und für wenigstens ein gewünschtes Probevolumen die ermittelte zugehörige Zeitdauer in die Steuereinheit (12) eingegeben und/oder gespeichert wird.

9. Verfahren nach Anspruch 8, bei dem zur Steuerung der Pumpe (20) während der Probenahme verschiedener gewünschter Probevolumina jeweils die jedem Volumen entsprechende, in die Steuereinheit (12) eingegebene oder dort bereits gespeicherte Zeitdauer verwendet wird.

10. Verfahren nach Anspruch 7, bei dem vor einer erneuten Probenahme die Ansaugleitung (34) mittels Druckbeaufschlagung durch die Pumpe (20) leergeblasen wird.

## Claims

1. A device (10) for removing a predetermined volume of a sample of a medium (36) flowing in an open conduit (38) or in an unpressurised manner in a pipe; which device (10) comprises:
- a control unit (12)
- a pneumatic switching mechanism (16) actuated by the latter,
- a pump (20) controlled by the control unit (12),
- a sample-collecting vessel (24) for receiving the sample volume,
- a drawing-off device (26),
- a hose line or pipe line used as a suction line (34),
-- through which the sample reaches the sample-collecting vessel (24) via an inlet (40),
**characterised by**
- a detection unit (42) integrated into the suction line (34),
-- which detection unit (42) ascertains the presence of the medium (36) in the suction line (34).

2. A device according to claim 1, in which the drawing-off device (26) comprises a flexible hose (28) and a squeezing device (30) for clamping the hose (28).

3. A device according to claim 1, in which the detection unit (42) is arranged as close as possible to the inlet (40) of the sample-collecting vessel (24).

4. A device according to claim 1, in which the detection unit (42) comprises an optical, capacitive, inductive sensor or a conductivity sensor for determining the presence of the medium (36) as well as a signal generator connected to the sensor, the signal of which signal generator serves to communicate the presence of the medium to the control unit (12).

5. A device according to claim 1, in which the pneumatic switching mechanism (16) is a valve block with a cam switching mechanism or with solenoid valves.

6. A device according to claim 1, in which the sample-collecting vessel (24) is provided with an emergency cutout (46) in the region of its inlet (40), which emergency cutout (46) breaks off the feed of the medium (36) into the sample-collecting vessel (24).

7. A method for removing a predetermined volume of a sample of a medium (36) flowing in an open conduit (38) or in an unpressurised manner in a pipe, having the following steps:
- a control unit (12) controls a pump (20), pneumatically connected to a sample-collecting vessel (24), and at least one valve in a pneumatic switching mechanism (16) comprising different valves, in such a manner that a low pressure is generated in the sample-collecting vessel (24);
- through the low pressure, the medium (36) is sucked from the conduit (38) or from the pipe into the sample-collecting vessel (24) through the suction line (34);
- as soon as a presence of the medium (36) is ascertained by a detection unit (40) integrated in the suction line (34) and this presence is signalled to the control unit (12), a preselected length of time corresponding to a desired sample volume and monitored by the control unit (12) starts to elapse;
- after the length of time has elapsed, the control unit (12) switches off the pump (20) and the pneumatic switching mechanism (16) in such a manner that the sample-collecting vessel (24) is opened to the atmosphere;
- under the influence of gravitation, the medium (36) still located in the suction line (34) and not required for the sample runs back into the conduit (38); and
- the sample located in the sample-collecting vessel (24) is drawn off into at least one sample container (32).

8. A method according to claim 7, in which before the actual sample taking, beginning with step a, for at least one predetermined sample volume there is ascertained the appropriate length of time required by the medium (36) in order to be drawn off and collect in the sample-collecting vessel (24), so that lengths of time pertaining to different sample volumes can be ascertained and the ascertained associated length of time for at least one desired sample volume is inputted into and/or stored in the control unit (12).

9. A method according to claim 8, in which for control of the pump (20) during the sample drawing of different desired sample volumes, in each case the length of time corresponding to each volume and inputted into the control unit (12) or already stored there is used.

10. A method according to claim 7, in which before a new sample drawing, the suction line (34) is blown empty by means of pressure action by the pump (20).

## Revendications

1. Dispositif (10) destiné au prélèvement d'un volume prédéterminé d'un échantillon d'un fluide circulant dans un caniveau ouvert (38) ou, exempt de pression, dans un tube (36) ; lequel dispositif (10) comprend :
- une unité de commande (12)
- un mécanisme de commutation pneumatique (16) commandé par l'unité de commande (12),
- une pompe (20) pilotée par l'unité de commande (12),
- un récipient collecteur d'échantillons (24) pour la collecte du volume de l'échantillon,
- un dispositif de transvasement (26),
- une conduite flexible ou rigide utilisée en tant que conduite d'aspiration (34),
-- à travers laquelle l'échantillon parvient par l'intermédiaire de l'ouverture d'entrée (40) dans le
récipient collecteur d'échantillons (24), **caractérisé par**
- une unité de détection (42) intégrée dans la conduite d'aspiration (34),
-- qui constate la présence du fluide (36) dans la conduite d'aspiration (34).

2. Dispositif selon la revendication 1, pour lequel le dispositif de transvasement (26) comporte un tuyau flexible (28) et un dispositif d'écrasement (30) destiné à interrompre l'écoulement de fluide dans le tuyau flexible (28).

3. Dispositif selon la revendication 1, pour lequel l'unité de détection (42) est disposée le plus près possible de l'ouverture d'entrée (40) du récipient collecteur d'échantillons (24).

4. Dispositif selon la revendication 1, pour lequel l'unité de détection (42) comporte un capteur optique, capacitif, inductif ou un capteur de conductivité destiné à déterminer la présence du fluide (36), ainsi qu'un générateur de signaux relié avec le capteur, dont le signal sert à signaler la présence du fluide à l'unité de commande (12).

5. Dispositif selon la revendication 1, pour lequel le mécanisme de commutation pneumatique (16) est soit un bloc de vannes muni d'un programmateur à cames, soit un bloc d'électrovannes.

6. Dispositif selon la revendication 1, pour lequel le récipient collecteur d'échantillons (24) est muni dans la zone de son ouverture d'entrée (40) d'un interrupteur d'arrêt d'urgence (46), qui interrompt l'alimentation du fluide (36) dans le récipient collecteur d'échantillons (24).

7. Procédé destiné au prélèvement d'un volume prédéterminé d'un échantillon d'un fluide circulant dans un caniveau ouvert (38) ou, exempt de pression, dans un tube (36), avec les étapes suivantes :
- une unité de commande (12) pilote une pompe (20) reliée de façon pneumatique à un récipient collecteur d'échantillons (24), et au moins une vanne dans un mécanisme de commutation (16) comprenant différentes vannes, de telle manière à générer une dépression dans le récipient collecteur d'échantillons (24) ;
- Du fait de la dépression, le fluide (36) est aspiré du caniveau (38) ou du tube à travers la conduite d'aspiration (34) dans le récipient collecteur d'échantillons (24) ;
- Dès que la présence du fluide (36) est détectée par une unité de détection (40) intégrée dans la conduite d'aspiration (34) et que cette présence est signalée à l'unité de commande (12), une durée présélectionnée selon le volume d'échantillon souhaité et surveillée par l'unité de commande (12) commence à s'écouler ;
- Après l'écoulement de la durée, l'unité de commande (12) arrête la pompe (20) et le mécanisme de commutation pneumatique (16) de telle manière à ouvrir le récipient collecteur d'échantillons (24) à l'atmosphère ;
- Sous l'influence de la gravitation, le fluide (36) se trouvant encore dans la conduite d'aspiration (34), qui n'est pas requis pour l'échantillon, recircule dans le caniveau (38) ; et
- l'échantillon se trouvant dans le récipient collecteur d'échantillons (24) est transvasé dans au moins un récipient d'échantillon (32).

8. Procédé selon la revendication 7, au cours duquel, avant le prélèvement de l'échantillon proprement dit, commençant avec l'opération a, la durée correspondante requise pour aspirer le fluide (36) et le collecter dans le récipient collecteur d'échantillons (24) est déterminée pour au moins un volume d'échantillon prédéfini, de telle sorte à pouvoir déterminer les durées correspondantes pour différents volumes d'échantillons et entrer et/ou enregistrer dans l'unité de commande (12) la durée correspondante déterminée pour au moins un volume d'échàntillon souhaité.

9. Procédé selon la revendication 8, au cours duquel est utilisée, en vue de la commande de la pompe (20) pendant le prélèvement de différents volumes d'échantillons souhaités, la durée correspondant à chaque volume, qui est entrée ou est déjà enregistrée dans l'unité de commande (12).

10. Procédé selon la revendication 7, au cours duquel la conduite d'aspiration (34) est vidée avant un nouveau prélèvement d'échantillon grâce à une mise en pression par la pompe (20).
